# EUROPÄISCHE PATENTANMELDUNG

(11) **EP 0 999 108 A1**
(43) Veröffentlichungstag der Anmeldung: **10.05.2000**
(21) Anmeldenummer: 99120829.9
(22) Anmeldetag: 25.10.1999
(51) Int. Cl.: B60T 13/74

(54) **Bremssystem für rotatorisch und/oder translatorisch bewegliche Teile**

(30) Priorität: 06.11.1998 DE 19851251
(71) Anmelder: SIEMENS AKTIENGESELLSCHAFT, 80333 München (DE)
(72) Erfinder: Heidt, Hans-Hermann, Dipl.-Ing., 91074 Herzogenaurach (DE); Konrad, Hilmar, Dipl.-Ing., 91058 Erlangen (DE)

(57) **Zusammenfassung**

Ein Bremssystem für rotatorisch und/oder translatorisch bewegliche Teile (8), das einfacher aufgebaut ist und das eine höhere Betriebssicherheit aufweist, umfaßt eine Schalteinrichtung (S), die eingangsseitig an eine Stromquelle (IQ) schaltbar ist und die ausgangsseitig an einen Aktuator (A) geschaltet ist, wobei der Aktuator (A) mit einer Bremsvorrichtung (BV) verbunden ist und vom Aktuator (A) bei einer ersten Schaltstellung (a) der Schalteinrichtung (S) die Bremsvorrichtung (BV) betätigt und bei einer zweiten Schaltstellung (b) der Schalteinrichtung (S) die Bremsvorrichtung (BV) gelöst wird.

## Beschreibung

Die Erfindung betrifft ein Bremssystem für rotatorisch und/oder translatorisch bewegliche Teile.

Derartige Bremssysteme umfassen eine Bremsvorrichtung, durch die bewegliche Teile aus ihrer Bewegung heraus durch eine Betriebsbremsung bis zum Stillstand abgebremst werden können. Werden die beweglichen Teile erneut in Bewegung gesetzt, dann wird die Bremsvorrichtung gelöst. Falls erforderlich oder gewünscht, kann beim Erreichen des Stillstandes durch eine Feststellbremsung der beweglichen Teile eine ungewollte erneute Bewegung aus dem Stillstand heraus verhindert werden. Mit derartigen Bremssystemen ist dann eine Betriebsbremsung mit integrierter Speicherfunktion möglich.

Bei den Bremssystemen, die beispielsweise bei Schienenfahrzeugen verwendet werden, handelt es sich um elektro-pneumatische oder elektro-hydraulische Bremssysteme. Die Betriebsbremsung mit integrierter Speicherfunktion wird bei diesen Bremssystemen dadurch gelöst, daß unter Verwendung eines geeigneten Kompressors Energie in einem Trägermedium und/oder Speichereinrichtung (Druckluft und Druckluftbehälter, Bremsflüssigkeit und Druckspeichereinrichtung) gespeichert wird. Mittels geeigneter voluminöser Hohlkörper (beispielsweise Druckluftleitungen und Druckluftbehälter) wird dieses Medium, in dem die Energie gespeichert ist, wiederum verteilt und gespeichert. Bei auf Flüssigkeiten basierenden Systemen dienen voluminöse Hohlkörper zusammen mit kompressiblen Medien (z. B. Luft) bzw. Komponenten (z. B. Feder-Kolben-Elemente) als Energiespeicher und Leitungssysteme (Rohre und/oder Schläuche sowie entsprechende Kupplungen) zur Energieverteilung.

Bei den bekannten elektro-pneumatischen oder elektro-hydraulischen Bremssystemen tritt ein erheblicher Energieverlust bei der Umwandlung von elektrischer Energie in im Medium gespeicherte Energie (Druckenergie) auf. Die zur Betriebsbremsung benötigte Energie muß mittels des Trägermediums (Druckluft, Bremsflüssigkeit) als Energieträger übertragen werden. Bei den bekannten Bremssystemen erfolgt die Ansteuerung der Bremsvorrichtung (Betätigungszylinder) aufgrund der Druckänderung im Trägermedium bzw. aufgrund der auf das Trägermedium ausgeübten Kraft. Bei pneumatischen Bremssystemen erfolgt die Ansteuerung der Bremsvorrichtung mit der Ausbreitungsgeschwindigkeit der Druckänderung im Trägermedium. Um einen zuverlässigen Betrieb der Bremsvorrichtung und damit eine zuverlässige Betriebsbremsung und ggf. eine zuverlässige Feststellbremsung zu gewährleisten, benötigen die bekannten pneumatischen Bremssysteme neben einem ersten Speicher (Hauptluftbehälter) einen zweiten Speicher (Hilfsluftbehälter). Weiterhin muß bei elektro-pneumatischen Bremssystemen der fehlerhaften Aktivierung der Bremstunktion aufgrund von Leckagen durch zyklisches Auffrischen des Druckes im Bremssystem entgegengewirkt werden. Darüber hinaus wird die Feststellbremsung durch die vorgenannten Leckagen eingeschränkt, da das Bremssystem aufgrund der beweglichen Steuerventile, der axial verschiebbaren Betätigungskolben im Betätigungszylinder und der gegebenenfalls vorhandenen Leitungsverbindungen nicht hermetisch schließbar ist.

Aufgabe der vorliegenden Erfindung ist es, ein Bremssystem für rotatorisch und/oder translatorisch bewegliche Teile zu schaffen, das einfacher aufgebaut ist und das eine höhere Betriebssicherheit aufweist.

Die Aufgabe wird erfindungsgemäß durch ein Bremssystem gemäß Anspruch 1 gelöst. Vorteilhafte Ausgestaltungen der Erfindung sind in den weiteren Ansprüchen beschrieben.

Das Bremssystem gemäß Anspruch 1 umfaßt eine Schalteinrichtung, die eingangsseitig an eine Stromquelle schaltbar ist und die ausgangsseitig an einen Aktuator geschaltet ist, wobei der Aktuator mit einer Bremsvorrichtung verbunden ist. Vom Aktuator wird bei einer ersten Schaltstellung der Schalteinrichtung die Bremsvorrichtung betätigt und bei einer zweiten Schaltstellung der Schalteinrichtung die Bremsvorrichtung gelöst.

Dadurch, daß die Schalteinrichtung ausgangsseitig an den Aktuator geschaltet ist, wird dieser direkt durch die Schalteinrichtung betätigt. In Abhängigkeit von der Schaltstellung der Schalteinrichtung wird durch den Aktuator entweder die Bremsvorrichtung betätigt oder gelöst.

Das erfindungsgemäße Bremssystem ermöglicht auf einfache Weise den Übergang von einem elektro-pneumatischen bzw. elektrohydraulischen Bremssystem zu einem rein elektrisch betriebenen Bremssystem mit vergleichbarer Funktionsweise.

Bei dem erfindungsgemäßen Bremssystem wird ohne Zwischenschaltung eines Kompressorsystems, das insbesondere bei Drucklufterzeugung einen schlechten Wirkungsgrad aufweist, die Bremsvorrichtung direkt betätigt oder gelöst. Weiterhin entfallen aufwendige Leitungssysteme (Rohre und/oder Schläuche sowie entsprechende Kupplungen) zur Verteilung des gasförmigen oder flüssigen Trägermediums, das in voluminösen Speicherbehältern gespeichert werden muß, sowie entsprechende Steuerventile. Damit gibt es beim Bremssystem nach Anspruch 1 kein Leckage-Problem. Das erfindungsgemäße Bremssystem ist kompakt aufgebaut, da keine voluminösen Speicherbehälter erforderlich sind. Dadurch ist das Bremssystem nach Anspruch 1 auch für ungünstige Einbauverhältnisse geeignet.

Bei dem erfindungsgemäßen Bremssystem entfallen die Aufrüstzeiten für Druckluftanlagen, die etliche Minuten betragen können. Des weiteren entfällt ein zyklisches Zuschalten der Kompressoren zur Aufrechterhaltung des erforderlichen Luftdrucks. Bei einer Verwendung des erfindungsgemäßen Bremssystems in Schienenfahrzeugen tritt damit beim Abstellen der Fahrzeuge keine Belästigung von Anwohnern auf. Darüber hinaus entfällt das Sammeln und die Entsorgung des bei der Entfeuchtung der Luft in Druckluftsystemen entstehenden ölhaltigen Kondensats.

Bei einer vorteilhaften Ausgestaltung gemäß Anspruch 2 ist der Aktuator als integrierender Aktuator mit einem Drei-Punkt-Steuerverhalten ausgebildet. Damit kann vom Aktuator bei einer dritten Schaltstellung der Schalteinrichtung die Bremsvorrichtung in ihrer zuletzt eingenommenen Position gehalten werden. Nach erfolgter Betriebsbremsung können die beweglichen Teile damit einerseits auf einfache und sichere Weise im Stillstand gehalten werden (Feststellbremsung). Andererseits wird dadurch auch eine zuverlässige Ruhestellung der Bremsvorrichtung erreicht. Damit wird sowohl eine unbeabsichtigte erneute Bewegung aus dem Stillstand heraus als auch eine ungewollte Betriebsbremsung während einer gewünschten Bewegung der beweglichen Teile zuverlässig verhindert.

Bei dem Bremssystem nach Anspruch 1 wird die Informationsübertragung für "Bremse anlegen", "Bremsstärke" und "Bremsdauer" bzw. "Bremsfrequenz" sowie "Bremse lösen" mit der Ausbreitungsgeschwindigkeit des elektrischen Stromes übertragen und steht damit quasi gleichzeitig an allen Aktuatoren des Bremssystems an.

Im Rahmen der Erfindung ist es möglich, die Aktuatoren als piezokeramische Aktuatoren (im allgemeinen proportionales Verhalten) oder als Memory-Metall-Aktuatoren (im allgemeinen bistabiles Verhalten) auszubilden.

Ist der Aktuator - wie in den Ansprüchen 3 bis 5 beschrieben - als elektrochemischer Aktuator ausgebildet, dann sind gemäß einer Ausgestaltung nach Anspruch 3 in der ersten Schaltstellung der Schalteinrichtung die Gleichspannungsanschlüsse des elektrochemischen Aktuators kurzgeschlossen und in der zweiten Schaltstellung der Schalteinrichtung die Gleichspannungsanschlüsse des elektrochemischen Aktuators an die Stromquelle geschaltet.

Gemäß einer gegenüber dem Bremssystem nach Anspruch 3 abgewandelten Ausgestaltung nach Anspruch 4 sind in der ersten Schaltstellung der Schalteinrichtung die Gleichspannungsanschlüsse des elektrochemischen Aktuators an die Stromquelle geschaltet und in der zweiten Schaltstellung der Schalteinrichtung die Gleichspannungsanschlüsse des elektrochemischen Aktuators kurzgeschlossen.

Bei der gemäß Anspruch 5 möglichen dritten Schaltstellung der Schalteinrichtung sind die Gleichspannungsanschlüsse des elektrochemischen Aktuators von der Stromquelle getrennt, wodurch der elektrochemische Aktuator und dadurch auch die Bremsvorrichtung in der zuletzt eingenommenen Position gehalten wird.

Aufgrund der Eigenschaften des elektrochemischen Aktuators ist bei den Bremssystemen gemäß den Ansprüchen 3 bis 5 eine sehr feine Einstellbarkeit der Bremskraft gegeben. Die Einbindung des Bremssystems in einen elektronischen Gleit- und Schleuderschutz ist aufgrund des elektrischen Funktionsprinzips erheblich vereinfacht.

Das erfindungsgemäße Bremssystem ist zur Abbremsung von rotatorisch beweglichen Teilen oder zur Abbremsung von translatorisch beweglichen Teilen geeignet. Darüber hinaus können mit dem Bremssystem auch Teile abgebremst werden, die sowohl rotatorisch als auch translatorisch beweglich sind. Damit ist das erfindungsgemäße Bremssystem für eine Vielzahl von Anwendungsfällen geeignet.

Bevorzugte Ausführungsbeispiele der Erfindung werden nun unter Hinweis auf die schematischen Zeichnungen im Vergleich zu einem Bremssystem gemäß dem Stand der Technik beschrieben. Es zeigen:
- FIG 1 und 2: ein elektro-pneumatisches Bremssystem gemäß dem Stand der Technik,
- FIG 3 und 4: eine Ausführungsform des erfindungsgemäßen Bremssystems,
- FIG 5 bis 7: eine Anwendung des erfindungsgemäßen Bremssystems bei Schienenfahrzeugen,
- FIG 8 und 9: eine weitere Ausgestaltung des erfindungsgemäßen Bremssystems,
- FIG 10 und 11: ein Beispiel für eine Bremsausführung bei einer translatorischen Bremse,
- FIG 12 und 13: ein Beispiel für eine Bremsausführung bei einer rotatorischen Bremse.

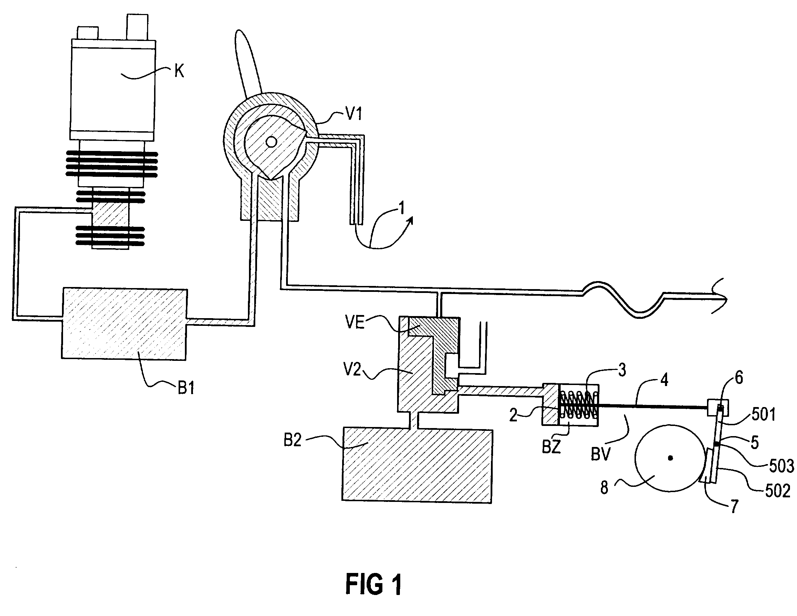

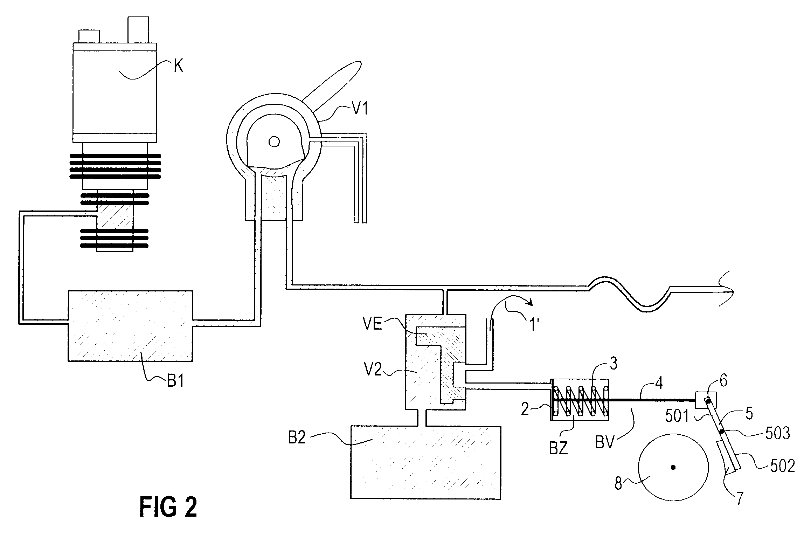

In den FIG 1 und 2 ist ein elektro-pneumatisches Bremssystem gemäß dem Stand der Technik dargestellt.

Das bekannte Bremssystem umfaßt einen Kompressor K, der das Trägermedium Druckluft komprimiert. Durch die Kompression wird im Trägermedium Energie (Druckenergie) gespeichert. Diese Energie wird bei der Betätigung einer Bremsvorrichtung BV in mechanische Energie umgewandelt.

Bei dem bekannten Bremssystem wird zunächst der Vorgang "Bremse anlegen" anhand von FIG 1 erläutert.

Durch Betätigung eines ersten Steuerventils V1 (z.B. Führerbremsventil) strömt das durch den Kompressor K komprimierte Trägermedium aus einem ersten Speicherbehälter B1 (Hauptluftbehälter) über ein Leitungssystem (Rohre und/oder Schläuche sowie entsprechende Kupplungen) in ein zweites Steuerventil V2 und über das zweite Steuerventil V2 in einen zweiten Speicherbehälter B2 (Hilfsluftbehälter). Das zweite Steuerventil V2 ist weiterhin mit einem Bremszylinder BZ einer Bremsvorrichtung BV verbunden.

Bei einer länger andauernden Betätigung des ersten Steuerventils V1 entweicht die Druckluft aus der Hauptluftleitung (Pfeil 1). Die im zweiten Speicherbehälter B2 gespeicherte Druckluft bewegt das Ventilelement VE des zweiten Steuerventils V2 derart, daß die Leitung zum ersten Speicherbehälter B1, die über das erste Steuerventil V1 führt, geschlossen und gleichzeitig die Leitung zum Bremszylinder BZ der Bremsvorrichtung BV freigegeben wird, so daß die Druckluft aus dem zweiten Speicherbehälter B2 in den Bremszylinder BZ strömt. Dadurch wird der Kolben 2 entgegen der Federkraft einer hinter dem Kolben 2 liegenden Feder 3 verschoben und damit die in der Druckluft (Trägermedium) gespeicherte Energie in federgespeicherte Energie umgewandelt. Mittels einer starren Kopplung 4 zwischen dem Kolben 2 und dem ersten Schenkel 501 eines Hebelarmes 5, der um einen Drehpunkt 503 beweglich ist, wird über einen Umlenkpunkt 6 ein am zweiten Schenkel 502 des Hebelarmes 5 befindlicher Bremsklotz 7 gegen ein Rad 8 gedrückt. Damit wird auf das Rad 8 eine Kraft ausgeübt, die zum Abbremsen des Rades 8 führt.

Ist das Rad 8 abgebremst, so wirkt die Kraft weiter und dient damit zum Halten des Rades 8 (Feststellbremsung).

Anhand von FIG 2 wird nunmehr der Vorgang "Bremse lösen" bei dem elektro-pneumatischen Bremssystem gemäß dem Stand der Technik erläutert.

Zum Lösen der Bremsvorrichtung BV muß der Bremsklotz 7 vom Rad 8 abheben, so daß dieses wieder frei um seine Achse drehen kann. Dadurch wird die Betriebsbremsung bzw. die nachfolgende Feststellbremsung rückgängig gemacht.

Das Lösen der Bremsvorrichtung BV wird durch Öffnen des ersten Steuerventils V1 eingeleitet. Dadurch strömt aus dem ersten Speicherbehälter B1 über das Leitungssystem die Druckluft zum zweiten Steuerventil V2. Durch die Druckluft (Trägermedium) wird das zweite Steuerventil V2 in der Weise umgesteuert, daß durch das Ventilelement VE des zweiten Steuerventils V2 die Leitung zum Bremszylinder BZ von einer weiteren Zufuhr von Druckluft aus dem zweiten Speicherbehälter B2 abgeschnitten wird. Gleichzeitig wird durch das Ventilelement VE des zweiten Steuerventils V2 in der Leitungsverbindung zwischen dem zweiten Steuerventil V2 und dem Bremszylinder BZ eine Öffnung zur Umgebung freigegeben, so daß die Druckluft aus dem Bremszylinder BZ entweichen kann (Pfeil 1'). Dadurch kann die Feder 3 durch ihre Federkraft den Kolben 2 wieder zurückdrücken. Durch das Zurückführen des Kolbens 2 wird über den Hebelarm 5 der Bremsklotz 7 vom Rad 8 abgehoben.

Bei einer Zugtrennung öffnet die Leitungsverbindung zum nächsten Wagen, wodurch die Druckluft aus der Leitung zwischen Steuerventil V1 und Steuerventil V2 entweichen kann, so daß das Ventilelement VE des zweiten Steuerventils V2 in dieselbe Position wandert wie bei dem in FIG 1 beschriebenen Vorgang "Bremse anlegen".

Bei dem in den FIG 1 und 2 beschriebenen elektro-pneumatischen Bremssystem gemäß dem Stand der Technik tritt ein erheblicher Energieverlust bei der Umwandlung von elektrischer Energie in Druckenergie auf. Die zur Betriebsbremsung benötigte Energie muß mittels der Druckluft als Energieträger übertragen werden. Um einen zuverlässigen Betrieb der elektro-pneumatischen Bremsvorrichtung und damit eine zuverlässige Betriebsbremsung und ggf. eine zuverlässige Feststellbremsung zu gewährleisten, benötigt das bekannte elektro-pneumatische Bremssystem neben einem ersten Speicherbehälter B1 einen zweiten Speicherbehälter B2. Weiterhin muß einer fehlerhaften Aktivierung der Bremsfunktion aufgrund von Leckage durch zyklisches Auffrischen des Druckes im System entgegengewirkt werden.

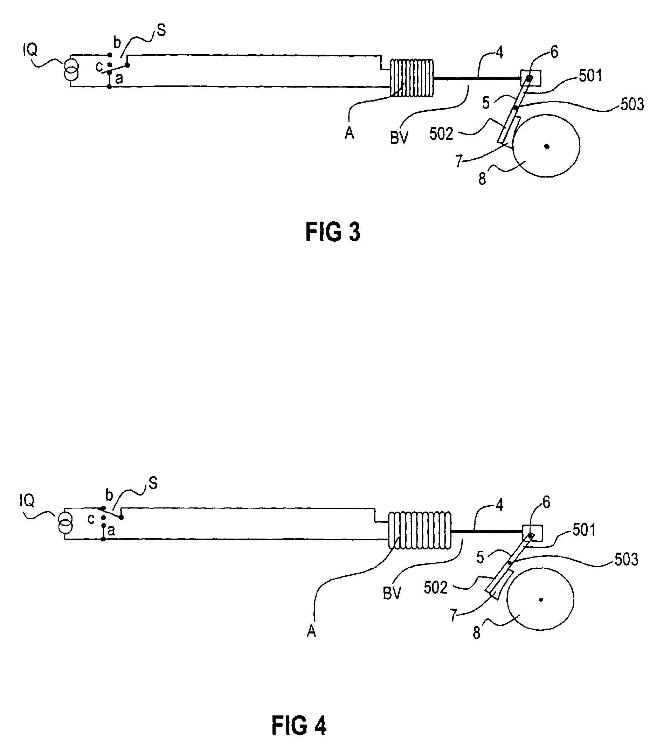

Die in den FIG 3 und 4 dargestellte Ausführungsform eines erfindungsgemäßen Bremssystems umfaßt eine Schalteinrichtung S, die eingangsseitig an eine Stromquelle IQ schaltbar ist und die ausgangsseitig an einen Aktuator A geschaltet ist.

Die Schalteinrichtung S kann drei verschiedene Schaltstellungen (erste Schaltstellung a, zweite Schaltstellung b, dritte Schaltstellung c) einnehmen.

Der Aktuator A ist als integrierender Aktuator mit einem Drei-Punkt-Steuerverhalten ausgeführt. Im dargestellten Ausführungsbeispiel handelt es sich um einen elektrochemischen Aktuator, dessen Gleichspannungsanschlüsse in Abhängigkeit von den drei verschiedenen Schaltstellungen der Schalteinrichtung S entweder (ggf. über einen Widerstand) kurzgeschlossen sind oder an die Stromquelle IQ geschaltet sind oder von der Stromquelle IQ getrennt sind (offene Gleichspannungsanschlüsse).

Zum Laden des elektrochemischen Aktuators A sind seine Gleichspannungsanschlüsse an die Stromquelle IQ geschaltet. Dadurch wird im elektrochemischen Aktuator A ein elektrochemischer Vorgang ausgelöst, der aus einer Flüssigkeit (vorzugsweise Wasser) Gas (Wasserstoff) erzeugt. Das erzeugte Gas, im beschriebenen Ausführungsbeispiel der erzeugte Wasserstoff, bewirkt eine Erhöhung des Innendrucks und damit eine Volumenvergrößerung. Da der Querschnitt des elektrochemischen Aktuators A konstruktiv bedingt konstant ist, führt die Volumenvergrößerung im wesentlichen zu einer Verlängerung des elektrochemischen Aktuators A innerhalb der konstruktiv vorgegebenen Grenzen.

Demgegenüber wird beim Entladen (Kurzschließen der Gleichspannungsanschlüsse) aus dem Gas (Wasserstoff) Flüssigkeit (Wasser) gebildet. Der Verbrauch des Gases Wasserstoff führt im elektrochemischen Aktuator A zu einem Druckabbau und damit zu einer Volumenreduzierung. Durch diesen reversibel ablaufende Prozeß der Volumenänderung beim elektrochemischen Aktuator A erfolgt über eine starre Kopplung 4 zwischen dem elektrochemischen Aktuator A und einem um einen Drehpunkt 503 beweglichen Hebelarm 5 eine Bewegung des Bremsklotzes 7 gegenüber einem Rad 8. Die starre Kopplung 4 ist hierzu über einen Umlenkpunkt 6 mit einem ersten Schenkel 501 des Hebelarms 5 verbunden und der Bremsklotz 7 ist am zweiten Schenkel 502 des Hebelarmes 5 angeordnet.

Sind die Gleichspannungsanschlüsse des elektrochemischen Aktuators A aufgetrennt (offene Gleichspannungsanschlüsse), so fließt kein Strom und der elektrochemische Aktuator A behält sein Volumen bei. Dadurch wird der Bremsklotz 7 der Bremsvorrichtung BV in der zuletzt eingenommenen Position gehalten.

Bei der in den FIG 3 und 4 dargestellten Ausführungsform des erfindungsgemäßen Bremssystems wird bei der ersten Schaltstellung a der Schalteinrichtung S die Bremsvorrichtung BV betätigt. Die Gleichspannungsanschlüsse des elektrochemischen Aktuators A werden (gegebenenfalls über einen Widerstand) kurzgeschlossen. Der Bremsklotz 7 liegt nach erfolgter Volumenreduktion des elektrochemischen Aktuators A am Rad 8 an und blockiert dieses.

Bei der zweiten Schaltstellung b der Schalteinrichtung S wird die Bremsvorrichtung BV gelöst, da die Gleichspannungsanschlüsse des elektrochemischen Aktuators A an die Stromquelle IQ geschaltet sind. Der Bremsklotz 7 hebt aufgrund der Volumenausdehnung des elektrochemischen Aktuators A vom Rad 8 ab.

Bei der dritten Schaltstellung c der Schalteinrichtung S wird die Bremsvorrichtung in ihrer zuletzt eingenommenen Position gehalten, da der elektrochemische Aktuator A wegen seiner offenen Gleichspannungsanschlüsse sein Volumen beibehält.

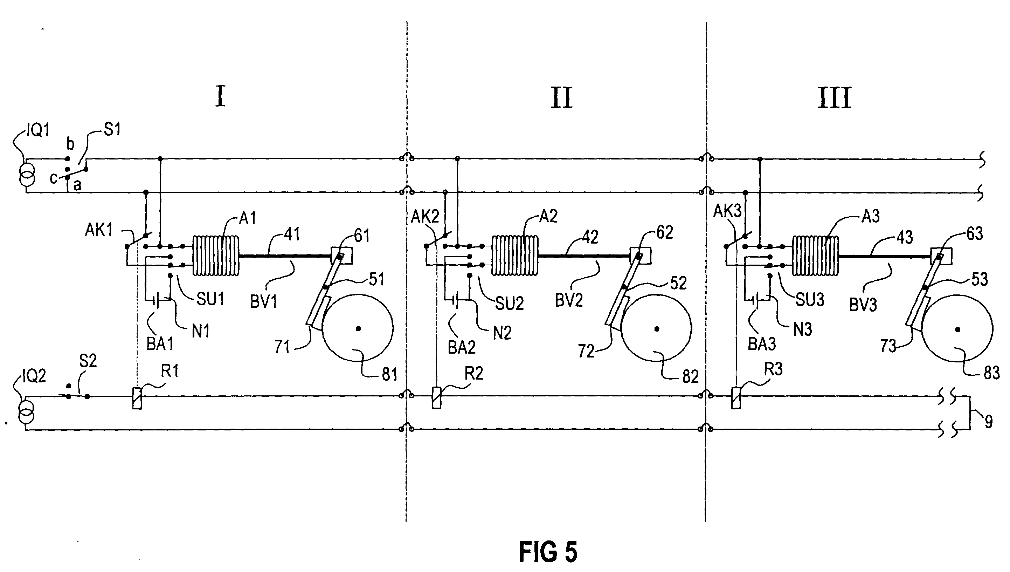

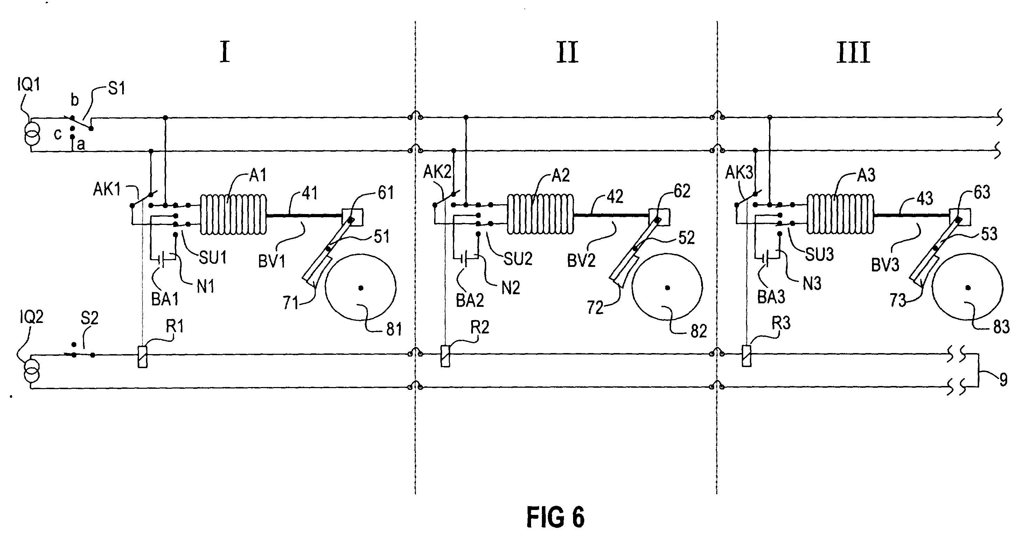

Bei dem in den FIG 3 und 4 dargestellten Ausführungsbeispiel wird durch die Drehbewegung des Hebelarms 5 um seinen Drehpunkt 503 zusammen mit der Umlenkbewegung um den Umlenkpunkt 6 eine Bewegung des Bremsklotzes 7 derart erreicht, daß in der zweiten Schaltstellung b der Schalteinrichtung S aufgrund der Volumenausdehnung des elektrochemischen Aktuators A der Bremsklotz 7 vom Rad gelöst wird. Weiterhin wird durch diese Maßnahme erreicht, daß sich der Bremsklotz 7 auf das Rad 8 zubewegt, wenn in der ersten Schaltstellung a der Schalteinrichtung S eine Volumenreduzierung des elektrochemischen Aktuators A eintritt. Damit läßt sich auf einfache Weise das in den FIG 5 bis 7 gezeigte Fail-Safe-Prinzip realisieren.

Das in den FIG 3 und 4 erläuterte Prinzip ist bei allen Arten von Bremssystemen für rotatorisch bewegliche Teile und/oder translatorische bewegliche Teile anwendbar.

Die Anordnung einer Ausführungsform des erfindungsgemäßen Bremssystems in einem Zugverband, der aus drei aneinandergekuppelten Wagen I bis III besteht, ist in den FIG 5 bis 7 dargestellt.

Im gezeigten Ausführungsbeispiel ist aus Gründen der Übersichtlichkeit für jeden Wagen I bis III jeweils nur ein Rad 81 bis 83 dargestellt. Jedes Rad 81 bis 83 ist durch eine Bremsvorrichtung BV1 bis BV3 abbremsbar.

Die Bremsvorrichtung BV1 umfaßt einen elektrochemischen Aktuator A1, der über eine starre Kopplung 41 und einen Umlenkpunkt 61 mit dem ersten Schenkel eines Hebelarms 51 verbunden ist und einen am zweiten Schenkel des Hebelarms 51 angeordneten Bremsklotz 71 gegen das Rad 81 drückt oder von diesem abhebt.

Die Bremsvorrichtungen BV2 und BV3 sind identisch aufgebaut und umfassen jeweils einen elektrochemischen Aktuator A2 bzw. A3, eine starre Kopplung 42 bzw. 43, einen Hebelarm 52 bzw. 53, einen Umlenkpunkt 62 bzw. 63 sowie einen Bremsklotz 72 bzw. 73.

Die elektrochemischen Aktuatoren A1 bis A3 sind parallel an eine Stromquelle IQ1 geschaltet, wobei parallel zu jedem elektrochemischen Aktuator A1 bis A3 jeweils eine Notlöseeinrichtung N1 bis N3 angeordnet ist. Die Notlöseeinrichtung N1 bis N3 umfaßt für jede Bremsvorrichtung BV1 bis BV3 einen Umschalter SU1 bis SU3, durch den die Gleichspannungsanschlüsse des betreffenden elektrochemischen Aktuators A1 bis A3 an eine Batterie Ba1 bis Ba3 schaltbar sind.

Die Funktionsweise der Bremsvorrichtungen BV1 bis BV3 wurde bereits anhand der FIG 3 und 4 erläutert.

Bei dem in den FIG 5 bis 7 dargestellten Zugverband werden alle drei elektrochemischen Aktuatoren A1 bis A3 über eine gemeinsame Schalteinrichtung S1 an die Stromquelle IQ1 geschaltet. Die Bezeichnung der Schaltstellungen bei der Schalteinrichtung S1 entspricht der Bezeichnung der Schaltstellungen bei der Schalteinrichtung S in den FIG 3 und 4. Die Schalteinrichtung S1 ist im Wagen I angeordnet, da sich in diesem Wagen der Führerstand befindet.

Bei dem in den FIG 5 bis 7 dargestellten Einsatz einer Ausführungsform des erfindungsgemäßen Bremssystems ist es vorteilhaft, eine parallel zum Stromkreis liegende, durch einen Kurzschlußbügel 9 geschlossene Sicherheitsschleife vorzusehen, die von einer Stromquelle IQ2 mit Strom versorgt wird. Die geschlossene Sicherheitsschleife öffnet sich beim Auftrennen des Zugverbandes (Abkoppeln wenigstens eines Wagens) und leitet damit eine automatische Bremsung aller Wagen I bis III ein.

Um diese Zwangsbremsung zu erreichen, ist in die Verbindungsleitung eines jeden elektrochemischen Aktuators A1 bis A3 zur Stromquelle IQ1 jeweils ein Arbeitskontakt AK1 bis AK3 eines durch die Sicherheitsschleife mit Strom versorgten Relais R1 bis R3 geschaltet.

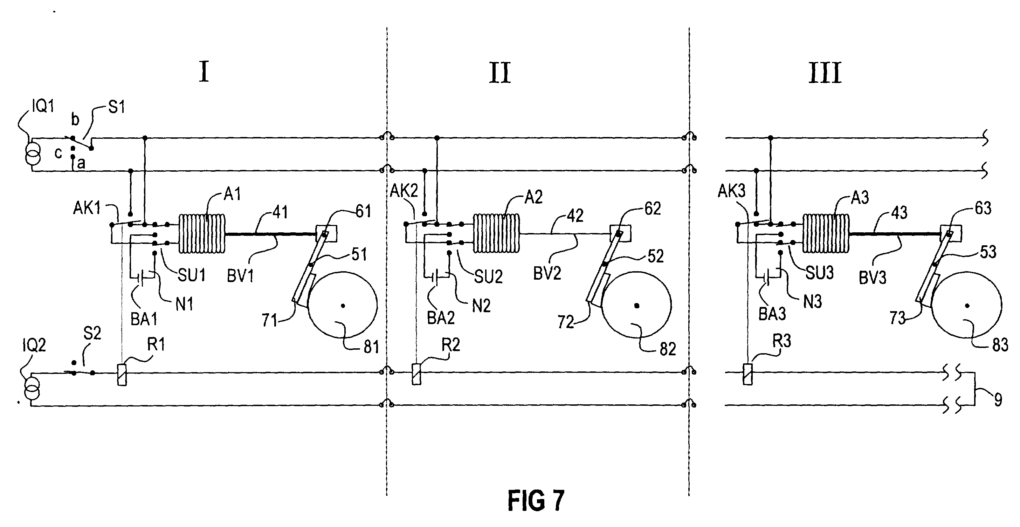

Koppelt nun bei dem in den FIG 5 bis 7 dargestellten Zugverband z. B. der letzte Wagen III ab, dann öffnet sich die Sicherheitsschleife, wodurch die Relais R1 bis R3 abfallen und dadurch die elektrochemischen Aktuatoren A1 bis A3 kurzschließen und eine Bremsung einleiten (Fail-Safe-Verhalten). Die Relais R1 bis R3 sind hierzu in vorteilhafter Weise als Schwerkraftrelais ausgebildet, die bei einer fehlenden Stromversorgung durch die Stromquelle IQ2 ihre Arbeitskontakte AK1 bis AK3 in Schließstellung bewegen (FIG 7).

In der FIG 7 ist der Vorgang der automatischen Bremsung bei einer Zugtrennung dargestellt. Die automatische Bremsung wird in der Weise erreicht, daß zunächst die Verbindung jedes elektrochemischen Aktuators A1 bis A3 zu der versorgenden Stromquelle IQ1 über die Arbeitskontakte AK1 bis AK3 der Relais R1 bis R3 unterbrochen wird. Die Relais R1 bis R3 werden damit nicht mehr von der Stromquelle IQ2 mit Strom versorgt. Gleichzeitig schließt der Arbeitskontakt AK1 bis AK3 eines jeden Relais R1 bis R3 jeweils die Gleichspannungsanschlüsse jedes elektrochemischen Aktuators A1 bis A3 kurz (aktive Ruhekontakte). Damit tritt bei jedem der elektrochemischen Aktuatoren A1 bis A3 eine Volumenreduzierung ein, die zum Einleiten des Bremsvorganges bei den betreffenden Rädern 81 bis 83 führt. Die Betriebsbremsung geht anschließend in eine Feststellbremsung über, da die von den elektrochemischen Aktuatoren A1 bis A3 ausgeübte Bremskraft beibehalten wird. Damit wird ein unbeabsichtigtes Wegrollen der Wagen I bis III zuverlässig verhindert.

Um die Wagen I bis III nach einer erfolgten Zwangsbremsung aufgrund eines abgekoppelten Wagens, der zu einer Öffnung der Sicherheitsschleife führt, wieder in Bewegung setzen zu können, muß jeder elektrochemische Aktuator A1 bis A3 mittels seiner Notlöseeinrichtung N1 bis N3 manuell an eine Hilfsspannung geschaltet werden. Diese Hilfsspannung wird im dargestellten Ausführungsbeispiel jeweils durch eine Batterie Ba1 bis Ba3 zur Verfügung gestellt.

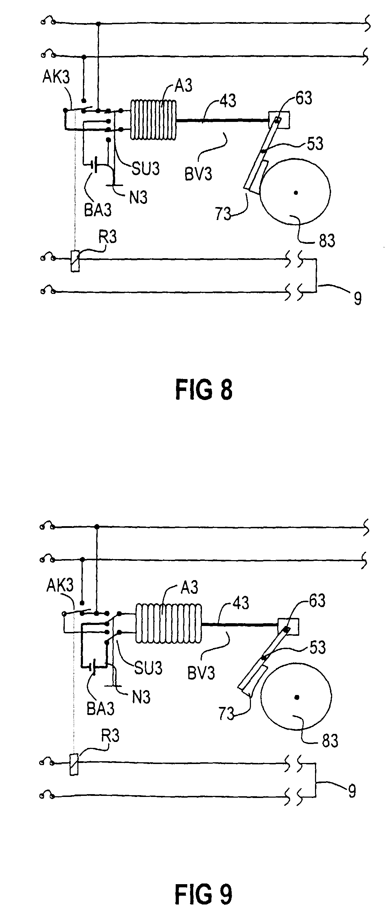

In der FIG 8 ist der Umschalter SU3 in seiner Ruhestellung gezeigt, d.h., der elektrochemische Aktuator A3 ist mit seinen Gleichspannungsanschlüssen nicht an die Batterie Ba3 geschaltet (Batterieanschlüsse offen). Wird nun der Umschalter SU3 in Arbeitsstellung gebracht, dann sind die Gleichspannungsanschlüsse des elektrochemischen Aktuators A3 mit den Anschlüssen der Batterie Ba3, welche die Hilfsspannung zur Verfügung stellt, verbunden. Der elektrochemische Aktuator A3 wird dann nur von der Batterie Ba3 mit Strom versorgt, wodurch sich das Volumen des elektrochemischen Aktuators A3 vergrößert. Dadurch löst sich der Bremsklotz 73 vom Rad 83. Nach dem Abtrennen der Gleichspannungsanschlüsse des elektrochemischen Aktuators A3 von den Anschlüssen der Batterie Ba3 (z. B. durch Abziehen der Batteriekontakte) behält der elektrochemische Aktuator A3 seinen Zustand bei, so daß der Bremsklotz 73 nicht mehr am Rad 83 anliegt.

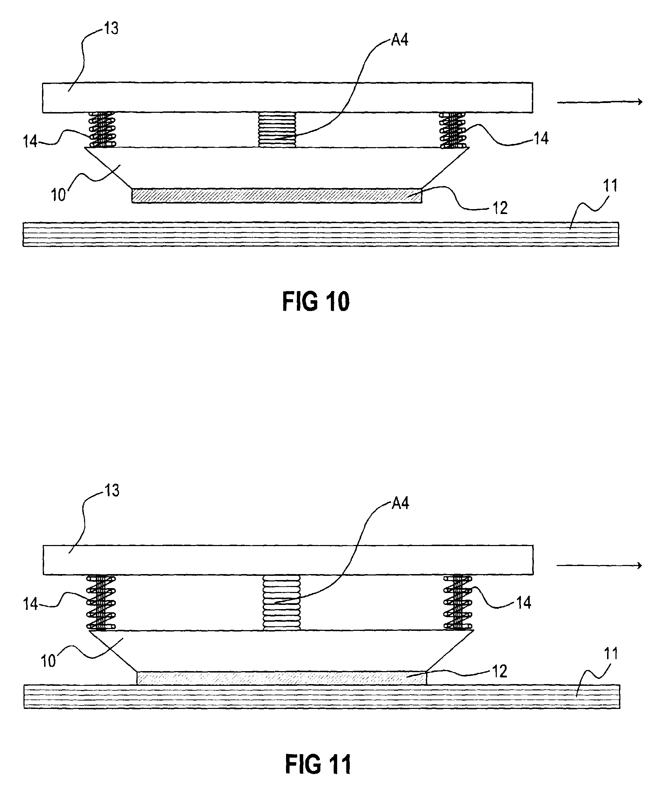

In den FIG 10 und 11 ist die Verwendung eines elektrochemischen Aktuators bei einer translatorischen Bremse gezeigt, wie sie beispielsweise bei Schienenfahrzeugen eingesetzt wird.

Bei der dargestellten translatorischen Bremse handelt es sich um eine sogenannte Schienenbremse, deren Bremsschuh 10 während des Bremsvorgangs auf die vom Schienenfahrzeug befahrene Schiene 11 abgesenkt wird. Die Bewegungsrichtung des Schienenfahrzeugs ist durch einen Pfeil gekennzeichnet.

Der Bremsschuh 10 der Schienenbremse weist auf seine der Schiene 11 zugewandten Seite einen Bremsbelag 12 auf.

Der Bremsschuh 10 ist vertikal in einem Widerlager 13 geführt, das z. B. an einem in den FIG 10 und 11 nicht dargestellten Drehgestell angeordnet ist. Zwischen dem Widerlager 13 und dem Bremsschuh 10 ist ein elektrochemischer Aktuator A4 angeordnet. Bei einer Volumenausdehnung des elektrochemischen Aktuators A4 wird durch eine Abwärtsbewegung des Bremsschuhs 10 der Bremsvorgang eingeleitet. Falls erforderlich, kann der Abhebevorgang zum Lösen der Bremse oder in umgekehrter Weise der Absenkvorgang zum Betätigen der Bremse durch vorzugsweise symmetrisch zum elektrochemischen Aktuator A4 angeordnete Federn 14 unterstützt werden.

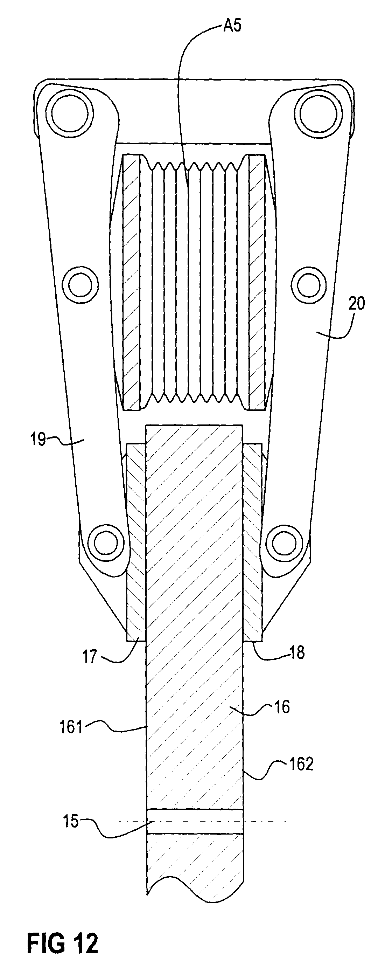

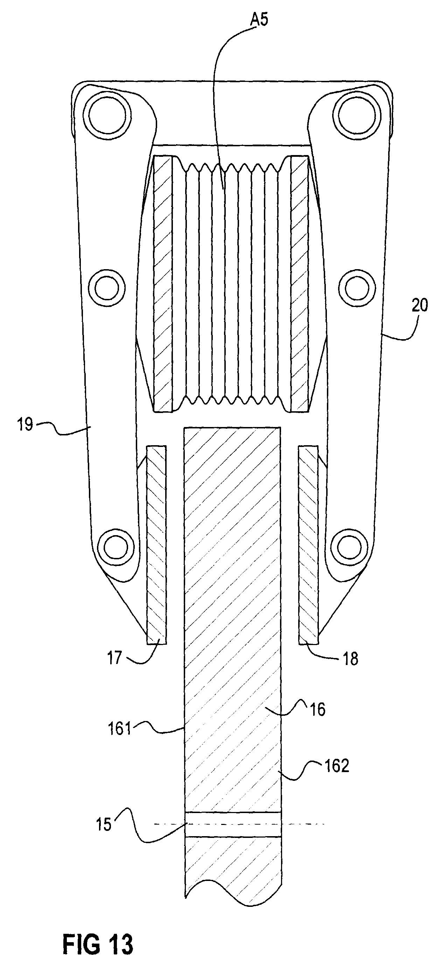

In den FIG 12 und 13 ist die Verwendung eines elektrochemischen Aktuators bei einer rotatorischen Bremse gezeigt.

Bei der dargestellten Ausführungsform einer rotatorischen Bremse wird ein um eine Achse 15 rotatorisch bewegliches Teil 16 an seinen beiden Seitenflächen 161 und 162 durch symmetrisch einwirkende Bremsklötze 17 und 18 abgebremst. Die Bremsklötze 17 und 18 sind jeweils an dem einen Ende zweier Bremsbacken 19 und 20 angeordnet. Zwischen den beiden Bremsbacken 19 und 20 ist ein elektrochemischer Aktuator A5 angeordnet. Der elektrochemische Aktuator A5 führt dazu, daß bei einer Volumenreduzierung des elektrochemischen Aktuators A5 eine Bremsung eingeleitet wird und bei einer Volumenausdehnung des elektrochemischen Aktuators A5 die Bremsklötze 17 und 18 von den Seitenflächen 161 und 162 des rotatorisch beweglichen Teils 16 abheben und damit die Betriebs- bzw. Feststellbremsung beendet wird.

## Patentansprüche

1. Bremssystem für rotatorisch und/oder translatorisch bewegliche Teile (8), das folgende Merkmale umfaßt:
- Eine Schalteinrichtung (S), die eingangsseitig an eine Stromquelle (IQ) schaltbar ist und die ausgangsseitig an einen Aktuator (A) geschaltet ist, wobei
- der Aktuator (A) mit einer Bremsvorrichtung (BV) verbunden ist und
- vom Aktuator (A)
-- bei einer ersten Schaltstellung (a) der Schalteinrichtung (S) die Bremsvorrichtung (BV) betätigt wird und
-- bei einer zweiten Schaltstellung (b) der Schalteinrichtung (S) die Bremsvorrichtung (BV) gelöst wird.

2. Bremssystem nach Anspruch 1, das folgende weitere Merkmale umfaßt:
- Der Aktuator (A) ist als integrierender Aktuator mit einem Drei-Punkt-Steuerverhalten ausgeführt, wobei
- vom Aktuator (A)
-- bei einer dritten Schaltstellung (c) der Schalteinrichtung (S) die Bremsvorrichtung (BV) in ihrer zuletzt eingenommenen Position gehalten wird.

3. Bremssystem nach Anspruch 1, das folgende weitere Merkmale umfaßt:
- Der Aktuator (A) ist als elektrochemischer Aktuator ausgebildet, wobei
-- in der ersten Schaltstellung (a) der Schalteinrichtung (S) die Gleichspannungsanschlüsse des elektrochemischen Aktuators (A) kurzgeschlossen sind,
-- in der zweiten Schaltstellung (b) der Schalteinrichtung (S) die Gleichspannungsanschlüsse des elektrochemischen Aktuators (A) an die Stromquelle (IQ) geschaltet sind.

4. Bremssystem nach Anspruch 1, das folgende weitere Merkmale umfaßt:
- Der Aktuator ist als elektrochemischer Aktuator ausgebildet, wobei
-- in der ersten Schaltstellung der Schalteinrichtung die Gleichspannungsanschlüsse des elektrochemischen Aktuators an die Stromquelle geschaltet sind,
-- in der zweiten Schaltstellung der Schalteinrichtung die Gleichspannungsanschlüsse des elektrochemischen Aktuators kurzgeschlossen sind.

5. Bremssystem nach Anspruch 2 und 3 oder 2 und 4, das folgendes weiteres Merkmal umfaßt:
-- In der dritten Schaltstellung (c) der Schalteinrichtung (S) sind die Gleichspannungsanschlüsse des elektrochemischen Aktuators (A) von der Stromquelle (IQ) getrennt.

6. Bremssystem nach einem der Ansprüche 1 bis 5, das folgendes weiteres Merkmal umfaßt:
- Integration des Bremssystems in ein Fahrzeug, insbesondere in ein Schienenfahrzeug.
